# EUROPÄISCHE PATENTSCHRIFT

(11) **EP 0 477 708 B1**
(45) Veröffentlichungstag und Bekanntmachung des Hinweises auf die Patenterteilung: **23.04.1997**
(21) Anmeldenummer: 91115652.9
(22) Anmeldetag: 14.09.1991
(51) Int. Cl.: C08L 33/12

(54) **Durch Weichmacherzusatz weichgemachte thermisch verfilmbare Masse auf Polymethacrylatbasis**
Thermically film forming matter based on polymethacrylate and plasticized by addition of plasticizer
Matière à bare de polyméthacrylate formant un film sous l'action de la chaleur et plastifiée par addition d'un plastifiant

(30) Priorität: 22.09.1990 DE 4030080
(43) Veröffentlichungstag der Anmeldung: 01.04.1992
(73) Patentinhaber: Röhm GmbH, 64293 Darmstadt (DE)
(72) Erfinder: Büchse, Joachim, W-6097 Trebur (DE); Quis, Peter, Dr., W-6100 Darmstadt (DE)

(56) Entgegenhaltungen:
- EP-A- 0 004 537
- EP-A- 0 378 993
- EP-A- 0 381 971
- DE-A- 2 454 235
- DE-A- 2 543 542
- Polymer Handbook, Second Edition, J.Brandrup, E.H.Immergut, Editors, Wiley-Interscience, New York, 1975, III-144 to III-149

## Beschreibung

### Gebiet der Erfindung:

Die Erfindung betrifft durch Weichmacherzusatz weichgemachte thermisch verfilmbare Massen auf Poly(meth)acrylatbasis, die Gemische aus einem feinteiligen Polymerisat, das durch Sprühtrocknung gewonnen wurde und einem Perlpolymerisat sowie Weichmacher enthalten.

### Stand der Technik:

Über längere Zeit hin haben Beschichtungen und Beläge aus Polyvinylchlorid (PVC) auf dem Markt aufgrund ihrer vielseitigen Anwendbarkeit und ihrer guten Gebrauchseigenschaften ein überragende Rolle gespielt. Als Ausgangsmaterial hat sich u. a. ein Gemisch aus in Emulsionspolymerisation und in Suspensionspolymerisation erzeugtem PVC bewährt. In jüngster Zeit zeichnet sich die Tendenz ab, das PVC durch andere Werkstoffe zu substituieren. Bei allen derartigen Bemühungen hatte jedoch zu gelten, daß die Praxis nicht bereit war, drastische Abstriche an der Qualität hinzunehmen, die man von PVC-Produkten gewohnt war.
Auf einigen Sektoren wie z. B. der Beschichtung von Metallen konnten Plastisole auf Poly(meth)acrylatbasis erfolgreich Fuß fassen (sogenannte PAMA-Plastisole vgl. DE-C 25 43 542, DE-C 31 39 090, DE-C 27 22 752, DE-C 24 54 235).
In der DE-C 3903669 sind nun Bodenbeläge aus Polymethylmethacrylaten, Weichmachern und gegebenenfalls Hilfsstoffen sowie Verfahren zu ihrer Herstellung vorgeschlagen worden. In dieser Druckschrift wird u. a. ausgeführt, daß durch die einfache Maßnahme als Polymeres ein reines Polymethylmethacrylat einzusetzen und dieses teilweise in Form eines Emulsions- oder Sprühpolymerisats teilweise in Form eines Suspensionspolymerisats einzusetzen, hervorragende Bodenbeläge erhalten werden können.

### Aufgabe und Lösung

Die genannte Patentschrift DE-C 390 3669 enthält eine eingehende Würdigung des Standes der Technik, aus der u. a. hervorgeht, daß Plastisole auf Acrylatbasis bestehend aus Methylmethacrylat-copolymerisaten und/oder Methacrylsäureestern von C₂ - C₁₀-Alkoholen in Mischung mit organischen Weichmachern und ggfs. Haftvermittlern sich zwar als Überzugstoffe eignen, jedoch als Hauptbestandteil eines Bodenbelags nicht geeignet sind. Als Hauptnachteil wird genannt, daß diese Materialien auch nach längerer Trocknungszeit und Beimischung von inerten Füllstoffen eine klebrige Oberfläche behalten. Aus solchem Material hergestellte Bahnen könnten daher weder aufgerollt noch gelagert werden noch seien sie als Bodenbelag geeignet, da sie Schmutz anzögen und die Laufeigenschaften durch den ausgeschwitzten Weichmacher für eine normale Benutzung nicht ausreichten.

Parallel zu der Lehre der o. g. Patentschrift wurden kalandrierte Bodenbeläge aus Polymethylmethacrylat, Weichmachern und gegebenenfalls Hilfsstoffen entwickelt (vgl. DE-C 39 03 670). Im Hinblick auf die Materialbasis unterscheidet sich diese Druckschrift jedoch nicht von der DE-C 39 03 669, d. h. auch hier kommt die Mischung aus einem Emulsionspolymerisat aus Methylmethacrylat und einem Suspensionspolymerisat aus Methylmethacrylat zusammen mit geeigneten Weichmachern zur Anwendung. In den beiden letztgenannten Patentschriften wird zweifellos zurecht auf die Schwierigkeit hingewiesen, geeignete Weichmacher für die beanspruchten Bodenbeläge ausfindig zu machen. So entfallen eine Reihe von Weichmachern, die bei PVC-Plastisolen und bei den PAMA-Plastisolen Eingang gefunden hatten, wie z. B. die längerkettigen Phthalsäureester, Sebacate und andere aliphatische Mono- und Dicarbonsäureester mehr oder weniger ganz.

Der vorliegenden Erfindung liegt die Aufgabe zugrunde, gegenüber dem Stand der Technik verbesserte Produkte zur Verfügung zu stellen, die mindestens gleichwertige Eigenschaften aber ein erweitertes Anwendungspotential bei möglichst geringer Beschränkung hinsichtlich der verwendbaren Weichmacher bieten sollten.

Es wurde nun gefunden, daß die weichgemachten, thermisch verfilmbaren Massen auf Poly(meth)acrylatbasis gemäß der vorliegenden Erfindung solche im Sinne der gestellten Aufgabe verbesserte Produkte darstellen.

Die Erfindung betrifft somit durch Weichmacherzusatz weichgemachte, thermisch verfilmbare Massen auf Poly(meth)acrylatbasis, welche ein aus einer Dispersion gewonnenes Polymerisat und ein Perlpolymerisat enthalten, wobei die Massen M Gemische aus den Komponenten
A) einem durch Sprühtrocknung von Polymerdispersion gewonnenes feinteiliges Copolymerisat FP aufgebaut aus
   - a-1) 50 - 100 Gew.-%: Methylmethacrylat und
   - a-2) 0 - 50 Gew.-%: mindestens eines von Methylmethacrylat verschiedenen Monomeren der Formel I 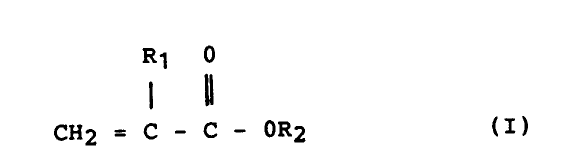 worin
   R₁ für Wasserstoff oder Methyl und
   R₂ für einen gegebenenfalls verzweigten Alkylrest mit 1 bis 10 Kohlenstoffatomen,
   - a-3) 0 - 5 Gew.-%: eines haftungsvermittelnden Monomeren HM
B) einem durch Suspensionspolymerisation gewonnenen Perlpolymerisat PP aufgebaut aus
   - b-1) 20 - 100 Gew.-%: Methylmethacrylat und
   - b-2) 0 - 80 Gew.-%: mindestens eines von Methylmethacrylat verschiedenen Monomeren der Formel (I)
   - b-3) 0 - 5 Gew.-%: eines haftungsvermittelnden Monomeren HM
C) einem Weichmacher W in Anteilen von 5 bis 200 Gew.- Teilen auf 100 Gew.-Teile der Polymermischung aus A) + B)
mit der Maßgabe, daß
α) mindestens eine der beiden Komponenten A) oder B) ein Copolymerisat mit a-2) oder b-2) darstellt, das mindestens 5 Gew.-% mindestens eines Monomeren der Formel I enthält
β) das Gewichtsverhältnis der Komponente A) zu der Komponente B) 95 : 5 bis 30 : 70 beträgt, darstellen, und daß
γ) die durch Sprühtrocknung gewonnenen Homo- oder Copolymerisate FP gemäß A) eine Primärteilchengröße im Bereich 0,1 - 0,5 µm besitzen,

Die Prozentangaben ergänzen sich in den Komponenten A) bzw. B) jeweils zu 100 Gew.-%.

Vorzugsweise ist das Gewichtsverhältnis der Komponente A) zu der Komponente B) in den Massen 80:20 bis 50:50. Weiter liegt der Anteil an Methylmethacrylat in der Komponente A) vorzugsweise bei 70 - 90 Gew. %.

Umgekehrt liegt der Anteil an den von Methylmethacrylat verschiedenen Monomeren der Formel I in der Komponente A) vorzugsweise bei 10 - 30 Gew.-%.

Ähnlich ist in der Komponente B) der Massen M ein Gehalt an Methylmethacrylat von 50 - 80 Gew.-% bevorzugt. Der Anteil an den Monomeren der Formel I in B) liegt vorzugsweise bei 20 - 50 Gew.-%, wobei betont sei, daß es sich bei den in den beiden Komponenten zur Anwendung kommenden Monomeren der Formel I um verschiedene, bzw. auch um verschiedene Monomergemische handeln kann.

Besonders bevorzugt ist der Fall, daß R₂ in der Formel I für einen C₄-Alkylrest, insbesondere einen Iso-Butylrest oder n-Butylrest steht.

Definitionsgemäß dürfen in den Monomeren der Formel I nicht gleichzeitig R₁ und R₂ für Methyl stehen d. h. diese Monomeren sind von Methylmethacrylat verschieden, dagegen kommt Methylacrylat als Monomer der Formel I in Frage.

Unter den haftungsverbessernden Monomeren HM als Bestandteile sowohl der Komponente A) als der Komponente B) seien solche radikalisch polymerisierbaren Monomeren verstanden, welche funktionale Gruppen besitzen, die mit den Materialien, die beschichtet werden sollen, in Wechselwirkung treten können. Eine derartige Wechselwirkung kann z. B. durch Wasserstoffbrückenbildung, Komplexierung, Dipolkräfte u. ä. zustande kommen, an denen in der Regel Heteroatome wie Stickstoff oder Sauerstoff beteiligt sind. Genannt seien als funktionale Gruppen die Aminoinsbesondere die Dialkylamino-, (cyclische) Amid-, Imid-, Hydroxy-, Oxy-, Carboxyl, Cyano-Gruppe. Derartige Monomere sind an sich bekannt. (vgl. H. Rauch-Puntigam Th. Völker, Acryl- und Methacrylverbindungen, Springer-Verlag 1967; Kirk-Othmer, Encyclopedia of Chemical Technology 3rd. Ed., Vol 1, pp 394-400, J. Wiley 1978; DE-A 2556 080; DE-A 2634033)

Vorzugsweise gehören die haftungsverbessernden Monomeren HM daher der Monomerklasse der stickstoffhaltigen Vinylheterocyclen mit vorzugsweise 5-Ringen neben 6-Ringen, und/oder der copolymerisierbaren vinylischen Carbonsäuren und/oder der Hydroxyalkyl-, Alkoxyalkyl- und der Aminoalkylsubstituierten Ester oder Amiden der Acryl- und Methacrylsäure an.

Als Stickstoff-heterocyclische Monomere HM seien insbesondere solche aus der Klasse der Vinylimidazole, der Vinyllactame, der Vinylcarbazole und der Vinylpyridine genannt.

Beispiele, die keinerlei Beschränkung darstellen sollen, für diese monomeren Imidazolverbindungen sind N-Vinyl-imidazol (auch Vinyl-1-imidazol genannt), N-Vinyl-methyl-2-imidazol, N-Vinyl-äthyl-2-imidazol, N-Vinyl-phenyl-2-imidazol, N-Vinyl-dimethyl-2,4-imidazol, N-Vinyl-benzimidazol, N-Vinylimidazolin (auch Vinyl-1-imidazolin genannt), N-Vinyl-methyl-2-imidazolin, N-Vinyl-phenyl-2-imidazolin und Vinyl-2-imidazol.

Als Beispiele für Monomere, die sich von den Lactamen ableiten, lassen sich insbesondere Verbindungen wie die folgenden anführen: N-Vinylpyrrolidon, N-Vinylmethyl-5-pyrrolidon, N-Vinylmethyl-3-pyrrolidon, N-Vinyläthyl-5-pyrrolidon, N-Vinyldimethyl-5-5-pyrrolidon, N-Vinylphenyl-5-pyrrolidon, N-Allylpyrrolidon, N-Vinylthiopyrrolidon, N-Vinylpiperidon, N-Vinyldiäthyl-6,6-piperidon, N-Vinylcaprolactam, N-Vinylmethyl-7-caprolactam, N-Vinyläthyl-7-caprolactam, N-Vinyldimethyl-7,7-caprolactam, N-Allylcaprolactam, N-Vinylcapryllactam.

Unter den Monomeren, die sich vom Carbazol ableiten, lassen sich insbesondere anführen: N-Vinylcarbazol, N-Allylcarbazol, N-Butenylcarbazol, N-Hexenylcarbazol und N-(Methyl-1-ethylen)carbazol.

Unter den copolymerisierbaren vinylischen Carbonsäuren seien insbesondere die Acryl- und die Methacrylsäure bzw. geeignete Salze derselben genannt.

Ferner seien die folgenden oxy- bzw. alkoxysubstituierten Alkylester der (Meth)acrylsäure angeführt:
2-Hydroxyethyl(meth)acrylat, Hydroxypropyl(meth)acrylat, 2-Methoxyethyl(meth)acrylat, 2-Ethoxyethyl(meth)acrylat, 2-Butoxyethyl(meth)acrylat, 2-(2-Butoxyethoxy)ethylmethacrylat, 2-(Ethoxyethyloxy)ethyl(meth)acrylat, 4-Hydroxybutyl(meth)acrylat, 2-[2-(2-Ethoxy-ethoxy)ethoxy]ethyl(meth)acrylat, 3-Methoxybutyl-1-(meth)acrylat, 2-Alkoxy-methylethyl(meth)acrylat, 2-Hexoxyethyl(meth)acrylat.

Weiterhin seien die folgenden aminsubstituierten Alkylester der (Meth)acrylsäure genannt:

2-Dimethylaminoethyl(meth)acrylat, 2-Diethylaminoethyl(meth)acrylat, 3-Dimethylamino-2,2-dimethylpropyl-1-(meth)acrylat, 3-Dimethylamino-2,2-dimethylpropyl-1-(meth)acrylat, 2-Morpholinoethyl(meth)-acrylat, 2-tert.-Butylaminoethyl(meth)acrylat, 3-(Dimethylamino)propyl(meth)acrylat, 2-(Dimethylaminoethoxyethyl)(meth)acrylat.

Als Vertreter der (Meth)acrylamide seien beispielsweise die folgenden Monomeren genannt:

N-Methyl(meth)acrylamid, N-Dimethylaminoethyl(meth)-acrylamid, N-Dimethylaminopropyl(meth)acrylamid, N-Isopropyl(meth)acrylamid, N-tert.Butyl(meth)acrylamid, N-Isobutyl(meth)acrylamid, N-Decyl(meth)acrylamid, N-Cyclohexyl(meth)acrylamid, N-[3-(Dimethylamino)-2,2-dimethylpropyl]-methacrylamid, N-Dodecyl(meth)acrylamid, N-[3-Dimethylaminopropyl](meth)acrylamid, N-[2-Hydroxyethyl](meth)acrylamid.

Im allgemeinen liegt das Molgewicht der feinteiligen Homo- oder Copolymerisate FP gemäß A) im Bereich 20 000 bis 150 000.

Die Herstellung der feinteiligen Homo- oder Copolymerisate FP durch Sprühtrocknung von Polymerdispersionen gemäß A) ist an sich bekannt. (vgl. H. Rauch-Puntigam, Th. Völker, Acryl- und Methacrylverbindungen loc. cit. S. 217-229; Kirk-Othmer, 3rd Ed. Vol. 1, loc. cit. pg. 397-400; EP-B 0294 663). Man arbeitet in an sich bekannter Weise, wobei neben den Monomeren als Medium (vorzugsweise destilliertes) Wasser, ein wasserlöslicher Initiator und ein Emulgator zur Anwendung kommen.

Als Initiatoren haben sich anorganische Peroxide wie Kalium- oder Ammoniumperoxidisulfat in Mengen von 0,001 bis 0,2 Gew.-% bezogen auf die Monomeren bewährt. Auch Redoxsysteme bestehend aus einer Peroxidkomponente und einer reduzierenden Komponente wie z. B. einem reduzierenden Salz einer Schwefel-Sauerstoffsäure lassen sich verwenden.

Als Emulgatoren kommen ebenfalls die üblichen mit einem HLB-Wert über 12, insbesondere anionische Emulgatoren wie z. B. die Salze langkettiger Paraffinsulfonsäuren infrage.

Bei einer bevorzugten Ausführungsform verfährt man so, daß man zu einer wässrigen Vorlage mit Initiator/Emulgator bei erhöhter Temperatur, beispielsweise ca. 80 °C eine wässrige Emulsion der Monomeren mit Initiator unter Rühren innerhalb einer gewissen Zeit beispielsweise 1 1/2 (± 1/2) Stunden zutropfen läßt und zur Vervollständigung der Polymerisation noch etwa über den gleichen Zeitraum bei erhöhter Temperatur hält. Nach dem Abkühlen kann der Reaktionsansatz sprühgetrocknet werden.

Auch die Sprühtrocknung kann in bekannter Weise erfolgen. Großtechnisch werden sogenannte Sprühtürme verwendet, die üblicherweise im Gleichstrom mit der eingesprühten Dispersion von oben nach unten mit Heißluft durchströmt werden. Die Dispersion wird durch eine oder viele Düsen versprüht oder bevorzugt mittels einer schnell rotierenden Lochscheibe zerstäubt. Die eintretende Heißluft hat eine Temperatur von 100 bis 250, vorzugsweise von 150 - 250 Grad C. Für die Eigenschaften des sprühgetrockneten Emulsionspolymerisats ist die Austrittstemperatur der Luft entscheidend, d. h. die Temperatur, bei der die getrockneten Pulverkörnchen am Fuß des Sprühturms oder in einem Zyklonabscheider von dem Luftstrom getrennt werden. Diese Temperatur soll möglichst unter der Temperatur liegen, bei der das Emulsionspolymerisat sintern oder schmelzen würde. In vielen Fällen ist eine Austrittstemperatur von 50 - 90 Grad C gut geeignet.

Die Austrittstemperatur läßt sich bei konstantem Luftstrom durch Variation der kontinuierlich je Zeiteinheit eingesprühten Dispersionsmenge regeln.

Die durch Sprühtrocknung der Polymerdispersion gewonnenen Homo- oder Copolymerisate FP weisen eine Primärteilchengröße im Bereich 0,1 bis 5 µm auf. (Bestimmung nach Ullmanns Encyclopädie der techn. Chemie 4. Auflage Bd. 5, S. 725 - 752; Die Korngrößenverteilung kann durch Messung der Lichtextinktion einer durch die Meßzelle eines Meßgeräts ("Kratel Partoskop F" der Kratel GmbH, Göttigen) strömenden Suspension der Teilchen in Wasser bestimmt werden. Eine sekundär erfolgende Aggregation der Primärteilchen kann zu Agglomeraten im Größebereich 5 - 100 µm führen, die aber gleichfalls im Sinne der vorliegenden Erfindung verwendbar sind.

Auch die Herstellung der Perlpolymerisate PP gemäß B) wird in an sich bekannter Weise durch Suspensionspolymerisation vorgenommen. (Houben-Weyl, 4. Auflage Bd. XIV/1 S. 406-433, Georg Thieme Verlag 1961 und Bd. E20, S. 1149-1154, Georg Thieme Verlag 1987, vgl. DE-C 2815 506; DE 907827). Bei der Suspensionspolymerisation werden die Monomeren (disperse Phase) unter Rühren in Wasser (kontinuierliche Phase) mit Hilfe von Dispergatoren bzw. Schutzkolloiden verteilt und mittels Initiatoren polymerisiert, die in den Monomeren löslich sind. Als Dipergatoren kommen bekanntlich anorganische Stoffe wie (kolloidales) Aluminiumhydroxyd, aber auch hochmolekulare Naturstoffe oder synthetische Polymere in Frage.

Das Verhältnis der wässrigen zur Monomerphase liegt meistens bei 2 : 4 bis 4 : 1 Gew.-Teilen.

Als Starter (Initiatoren) kommen insbesondere organische Peroxy- bzw. Azoverbindungen infrage, beispielsweise Acylperoxide wie Dibenzoylperoxid, Lauroylperoxid, tert. Butylperpivalat in Mengen von 0,1 bis 0,7, vorzugsweise 0,2 - 0,5 Gew.-% bezogen auf die Monomeren.

In beiden Fällen d. h. zur Herstellung der Polymerisate FP und PP kann das Molekulargewicht durch Zusatz von Reglern, gewöhnlich von Schwefelreglern, insbesondere von Alkylmercaptanen wie z. B. Dodecylmercaptan, Laurylmercaptan in Mengen von gewöhnlich ca. 0,05 bis 0,5 Gew.-% bezogen auf die Monomeren geregelt werden. Das Molgewicht liegt im allgemeinen im Bereich 20 000 - 200 000.

Man erhält gewöhnlich 20 - 50 %ige Perlsuspensionen, aus denen sich die Polymerisatperlen durch Filtrieren, Dekantieren oder Zentrifugieren abtrennen lassen. Die Perlpolymerisate PP besitzen im allgemeinen eine Teilchengröße von 10 - 100 µm, vorzugsweise 40 - 60 µm.

Wie bereits erwähnt, besteht hinsichtlich der ohne Einschränkung geeigneten Weichmacher eine wesentlich größere Anwendungsbreite als bei dem unmittelbar vergleichbaren Stand der Technik. Primär kommen Weichmacher mit geringerer Polarität infrage, wie z. B. die Alkylester der Phthalsäure, der Adipinsäure, der Sebacinsäure, chlorierte Paraffine, Trialkylphosphate, aliphatische oder araliphatische Polyester neben Weichmachern mit mittlerer Polarität wie höhere Polyglykole, Phthalsäurepolyester oder Adipinsäurepolyester u. v. a. Als ein Hinweis kann gelten, daß in der Regel auch alle für PVC geeigneten Weichmacher eingesetzt werden können, wobei die Gruppe der Phthalat-Weichmacher wegen ihrer herausragenden technischen Bedienung besonders hervozuheben ist. Eine ausführliche Beschreibung geeigneter Weichmacher findet sich im Kunststoff-Handbuch Herausg. H. K. Felger Bd. 1/1 C, Hanser Verlag 1985 sowie in H. F. Mark et al. Encyclopedia of Polymer Science and Engineering, Supplemental Volume pg 568-647, J. Wiley 1989. Eine Auswahl geeigneter Weichmacher kann auch der DE-C 25 43 542 entnommen werden.

Besonders erwähnt seien das Diisodecylphthalat, Dioctylphthalat. Wie bereits vorstehend ausgeführt wurde, kommen die Weichmacher in Anteilen von 5 bis 200 Gew.-Teilen, auf 100 Gew.-Teile der Polymermischungen aus A) und B) zur Anwendung.

Die Massen M können anwendungsbedingt noch an sich bekannte Hilfsstoffe wie Haftvermittler, Netzmittel, Verlaufsmittel, Treibmittel in Anteilen von 0 bis 5 Gew.-% (bezogen auf die Massen M) enthalten.

### Anwendungen der erfindungsmäßigen Massen M

- Herstellung von Plastisolen
   Prinzipiell kann die Mischung der Komponenten für die erfindungsmäßigen Massen M mit verschiedenartigen Mischern vorgenommen werden. Im Einklang mit den Erfahrungen bei PVC- und PAMA-Plastisolen werden jedoch langsam laufende Planeten-Rührwerke, Hochgeschwindigkeits-Mischer bzw. Dissolver, Horizontal-Turbomischer und Dreiwalzwerke bevorzugt; wobei die Wahl von der Viskosität der erzeugten Plastisole beeinflußt wird.
   (Vgl. H. F. Mark et al., Encyclopedia of Polymer Science and Engineering 2 ^{nd} Ed. Vol. 17, 365-866 J. Wiley 1989). Gemischt wird, bis Homogenisierung der Masse eingetreten ist.
   Die Masse kann in Schichtstärken von 1 - 5 mm bei Temperaturen von 100 - 200 °C innerhalb von 30 bis 2 Minuten geliert werden. Man erhält in der Regel eine transparente flexible Folie.
   Die aus den Massen M gemäß der vorliegenden Erfindung erhältlichen Plastisole sind für vielerlei Anwendungen geeignet, wie sie beispielsweise durch die Anwendungsbereiche für PVC- und PAMA-Plastisole vorgezeichnet sind. Besonders hervorgehoben sei die Anwendung als Laufschicht für Bodenbeläge durch Applikation auf einem gegebenen Träger. Weiterhin sind freie transparente Folien, die aus diesen Plastisolen hergestellt werden können von technischem Interesse.
- Anwendung für "Dryblends".
   Bei der Anwendung zur Gewinnung von "Dryblends" werden zusätzlich zu den Komponenten A), B) und C) noch die üblichen Filler und/oder Pigmente in der Regel in Anteilen von 5 bis 50 Gew.-% vorzugsweise um ca. 20 Gew.-% bezogen auf die Massen M zugemischt.
   Als Filler kommen ebenfalls die an sich üblichen, wie z.B. mikronisiertes Calciumcarbonat, Bariumsulfat u.ä. infrage. An Pigmenten seien Titandioxid, Eisenoxidpigment, Molybdatrot oder verträgliche organische Pigmente genannt die z.T. leicht dispergierbar sind, sodaß ein einfaches Anpasten mittels Dissolver in vielen Fällen eine ausreichende Dispergierqualität liefert. Es kommen jedoch auch Farbpasten infrage, die meist Dispersionen von Pigmenten in Weichmachern darstellen, die mit Hilfe der genannten Mischvorrichtungen erhalten werden können.
- Anwendung für "Gefüllte Plastisole".
   Dabei werden die aus den Komponenten A, B) und C) sowie Weichmacher, Füller und Farbpigmente bestehenden Ausgangsprodukte (siehe Dryblends) auf einem Dreiwalzwerk oder mit Hilfe eines Dissolvers homogenisiert.
   Bei einer bevorzugten Rezeptur entspricht der Weichmacheranteil C) gewichtsmäßig etwa dem Polymeranteil A)+B). Als Anhalt sei ein Gewichtsverhältnis von A) zu B) wie 5:1 genannt.
   Die gebildete Masse M kann z.B. in Schichtstärken von 1-5 mm bei Temperaturen von 100-200 °C innerhalb von 30 Minuten (niedere Temperatur) bis 2 Minuten (höhere Temperatur) geliert werden. Man erhält eine transparente, flexible Folie. Derartige Folien eignen sich z.B. sehr gut zur maschinellen Beschichtung von mit Primer versehenem Blech ("Coil coating"-Verfahren) oder als Siebdruckmasse zur Beschichtung von Textilien.
- Anwendung für "Geschäumtes Plastisol"
   Eine Rezeptur wie Sie für "gefüllte Plastisole" vorgeschlagen wurde, wird mit einer ausreichenden Menge- als Anhalt seien ca. 3 Gew.-% genannt - eines einschlägig verwendeten Schäumungsmittels z.B. einer kontrollierbar Stickstoffreisetzenden Verbindung wie Azodicarbonamid versehen.
   Bei Geliertemperaturen von ca. 160 °C erfolgt Verfilmung und Schaumbildung. Solche geschäumten Plastisole eignen sich z.B. als Zwischenschichten für Bodenbeläge.
- Anwendung für "Selbsthaftende Plastisole"
   Eine Rezeptur analog der für "Gefüllte Plastisole" (siehe oben) wird mit einem Vernetzer, beispielsweise einem Ester der (Meth)acrylsäure mit einem mehrwertigen Alkohol, genannt sei z.B. Trimethylolpropantrimethacrylat, in den üblichen Mengen, z.B. 1-7 Gew.-% sowie einem geeigneten Initiator, z.B. den für die Polymerisation genannten Verbindungen wie z.B. tert. Butylperbenzoat in Mengen um 0,25 Gew.-% (bezogen auf die Rezeptur) gemischt. Bei Geliertemperaturen von etwa 140 °C wird eine auf blankem Eisenblech fest haftende Beschichtung erhalten.
   Weiterhin können die Erfindungsmassen M als Kleberplastisole, als Dichtplastisole oder als Punktschweißpasten für Eisenbleche mit sehr gutem Erfolg verwendet werden.

### Vorteilhafte Wirkungen

Die erfindungsgemäßen Massen M eröffnen ein weites Anwendungsgebiet. Genannt seien außer den bereits genannten noch die Anwendungengen für Tapeten, Kunststoff-Planen (LKW-Planen), Autohimmel, Armaturenbrett-Verkleidungen u.v.a.m. Gegenüber den Massen des Standes der Technik (s. Std. der Technik) zeichnen sie sich durch verbesserte mechanische Eigenschaften wie z.B. besseres Rückstellverhalten aus. Von besonderem Gewicht ist auch das verbesserte Weichmacher-Rückhaltevermögen.

### I. Herstellungsbeispiele

### A: Herstellung der sprühgetrockneten Polymerisate FP aus Polymerdispersionen.

In einem Wittschen Topf (21) mit Rückflußkühler, Rührwerk und Zulaufgefäß werden bei 80 °C 0,1 g Ammonperoxydisulfat und 0,3 g C15-Paraffinsulfonat in 400 g destilliertem Wasser gelöst. In diese Lösung wird unter Rühren innerhalb 2 1/2 Stunden eine Emulsion folgender Zusammensetzung zugetropft.
- Emulsion:: 500 g Monomere [Monomer a-1) und ggfs.
Monomere a-2) und a-3)]
2,35 g Emulgator
0,15 g Initiator
300 g Wasser

Nachdem alles zugegeben ist, wird der Ansatz 2 Stunden bei 80 °C gehalten und dann auf ca. 25 °C abgekühlt.
Die so erhaltene Dispersion wird durch Sprühtrocknung in ein feinteiliges Polymerisatpulver FP überführt. Die besten Eigenschaften im Hinblick auf eine Plastisolanwendung haben diejenigen Polymerisatpulver, bei deren Herstellung durch schonende Trocknung eine starke Versinterung der Latexpartikel vermieden wurde.
Die ηsp/C-Werte (siehe B:) liegen im allgemeinen im Bereich 120-140 ml/g.

### A-1. Herstellung eines Polymerisates FP mit folgender Emulsion

534 g Methylmethacrylat
133 g n-Butylmethacrylat
3,13 g Emulgator
0,20 g Initiator
400 g dest. Wasser

### B. Herstellung der Perlpolymerisate PP

Die Perlpolymerisate werden in einem 100-1-V4A-Kessel mit Impellerrührer und Wellenbrecher hergestellt. Die Beheizung erfolgt durch einen Heizmantel mit Wasserumlauf. Die Apparatur ist mit Temperaturfühler, Rücklaufkühler und Einrichtungen für die Spülung mit Inertgas ausgerüstet; die Rührgeschwindigkeit läßt sich über Getriebe variieren. Die Polymerisation wird in folgender Weise durchgeführt:

Zur Erzeugung des Verteilers (Suspensionsstabilisators) wird Aluminiumsulfat in der vorgelegten Gesamtmenge an entionisiertem Wasser unter Rühren, Durchleiten von Inertgas (N₂ bzw. CO₂) und Aufheizen auf Polymerisationstemperatur (65 bis 80 °C) gelöst und durch Zusatz wäßriger Sodalösung bis zum Erreichen eines pH-Wertes von 5,5 als Aluminiumhydroxyd ausgefällt. Zur Verbesserung der Verteilerwirkung werden 5 %, berechnet auf Al(OH)₃, eines C14- bis C16- Alkylsulfonats in Form des Natriumsalzes zugesetzt.

In diese Verteilersuspension wird die Monomerenphase, die den Initiator und gegebenenfalls Molekulargewichtsregler und sonstige Zusätze, wie Weichmacher usw., in gelöster Form enthält, eingebracht und durch die Scherwirkung des Rührers in Form feiner Tröpfchen dispergiert.

Die Drehzahl des Rühres ist in weiten Grenzen variierbar. Voraussetzung ist, daß durch das Rührsystem neben der Dispergierung des Monomeren zu Tröpfchen gewünschter Größe eine so starke Vertikalumwälzung des Kesselinhaltes erfolgt, daß das durch Dichtunterschiede zwischen Wasser- und Monomerphase bedingte Aufrahmen bzw. Absinken der Monomertröpfchen verhindert wird.

Bei dem hier verwendeten Verhältnis zwischen Wasser- und Monomerphase von 3:1 ergibt sich folgende Ansatzgröße: 45 kg Wasser, 15 kg Monomere.

Während der Polymerisation wird die Temperatur der Umlaufheizung konstant gehalten. Die Innentemperatur zeigt innerhalb 30 bis 120 Minuten um 10 bis 20 °C über der Anfangstemperatur an. Die erreichte Temperatur wird durch Regelung der Heizung etwa 2 Stunden konstant gehalten, danach wird der Ansatz auf etwa 25 °C abgekühlt und nach Auflösung des Verteilers durch Zusatz von Schwefelsäure auf einer Nutsche oder einem Dekanter von der Hauptmenge Wasser getrennt.

Durch Nachwaschen mit entionisiertem Wasser werden die löslichen Polymerisationshilfsstoffe entfernt.

Der Anteil des im Perlpolymerisat verbleibenden Wassers läßt sich durch Variation der Absaug- bzw. Schleuderbedingungen variieren. Die Bestimmung des Wasseranteils erfolgt gravimetrisch.

Die mittlere Teilchengröße der Polymerisatperlen wird mikroskopisch bestimmt.

Zur Kennzeichnung der Molekülgröße ist der bei 200 °C in Chloroform bzw. in Nitromethan gemessene ηsp/C-Wert (Makromolekulare Chemie, 7. S: 294, 1952) geeignet. Die ηsp/C-Werte liegen im allgemeinen im Bereich 120-400 ml/g.

### B-1 Herstellung eines Perlpolymerisats PP folgender Zusammensetzung:

80 Gew.-Teile Methylmethacrylat
20 Gew.-Teile n-Butylmethacrylat
0,5 Gew.-Teile Lauroylperoxid (bezogen auf die Monomeren)
0,2 Gew.-Teile Dodecylmercaptan (" " )
0,4 Gew.-Teile Al(OH)3 (" " )
Perlgröße: ca. 60 µm, Wassergehalt: ca. 1,5 Gew.-%

### II. Anwendungsbeispiele

### 1. Anwendungsbeispiel "ungefülltes Plastisol"

40 Gew.-% sprühgetrocknere Dispersion gemäß Beispiel A-1
20 Gew.-% Perlpolymerisat gemäß Beispiel B-1
60 Gew.-% Benzyl-2-ethyl-hexyl-phthalat

Die Komponenten werden in bekannter Weise auf dem Dreiwalzwerk oder mit Hilfe eines Dissolvers homogenisiert. Die Masse kann in Schichtstärken von 1-5 mm bei Temperaturen von 100-200 °C innerhalb von 30 - 2 Minuten geliert werden. Erhalten wird eine transparente, flexible Folie.

Anwendung z.B. als Laufschicht für Bodenbeläge (Applikation auf dem gegebenem Träger) oder als freie transparente Folie.

### 2. Anwendungsbeispiel "Dryblends"

40 Gew.-% sprühgetrocknete Dispersion gemäß Beispiel A-1
20 Gew.-% Perlpolymerisat gemäß Beispiel B-1
20 Gew. % Benzyl-2-ethyl-hexyl-phthalat
15 Gew.-% gefüllte Kreide
5 Gew.-% Eisenoxidpigment

Die Komponenten werden bis zur Homogenität in einem Mischwerk (Zwangsmischer) gemischt.

Die Herstellung der Folie aus einem solchen Dryblend erfolgt mittels Kalander bei Temperaturen um 150 °C. Anwendung als Bodenbelag bzw. als freie Folie.

### 3. Anwendungsbeispiel "gefülltes Plastisol"

25 Gew.-% sprühgetrockente Dispersion gemäß Beispiel A-1
5 Gew.-% Perlpolymerisat gemäß Beispiel B-1
30 Gew.-% Benzyl-2-ethylhexyl-phthalat
35 Gew.-% gefüllte Kreide
5 Gew.-% Eisenoxidpigment

Die Komponenten werden in bekannter Weise auf einem Dreiwalzwerk oder mit Hilfe eines Dissolvers homogenisiert. Die Masse kann in Schichtstärken vom 1-5 mm bei Temperaturen von 100-200 °C innerhalb von 30 - 2 Minuten geliert werden. Erhalten wird eine transparente, flexible Folie.

Anwendung z.B. zur maschinellen Beschichtung von mit Primer versehenem Blech (Coilcoatingverfahren) oder als Siebdruckmasse für die Bedruckung von Textilien.

### 4. Anwendungsbeispiel "geschäumtes Plastisol"

Die Rezeptur analog Beispiel 3 wird mit 3 Gew.-% Azodicarboamid versehen.

Bei Geliertemperaturen von ca. 160 °C erfolgt Verfilmung und Schaumbildung.

Anwendung: Zwischenschicht für Bodenbeläge.

### 5. Anwendungsbeispiel "selbsthaftendes Plastisol" für Metallbeschichtung

Die Rezeptur analog Beispiel 3 wird mit 5 Gew.-% Trimethylolpropantrimethacrylat und 0,25 Gew.-% tert. Butylperbenzoat vesetzt.

Bei Geliertemperaturen von 140 °C wird eine auf blankem Eisenblech fest haftende Beschichtung erhalten.

Weiterhin kann eine solche Masse als Klebeplastisol, Dichtmasse oder Punktschweißpaste für Eisenblech Verwendung finden.

## Patentansprüche

1. Durch Weichmacherzusatz weichgemachte thermisch verfilmbare Massen auf Poly(meth)acrylatbasis, die ein aus einer Dispersion gewonnenes Polymerisat und ein Perlpolymerisat enthalten,
dadurch gekennzeichnet,
daß die Massen Gemische aus Komponenten
A) einem durch Sprühtrocknung von Polymerdispersionen gewonnenen feinteiligen Homo- oder Copolymerisat FP aufgebaut aus
a-1) 50 - 100 Gew.-% Methylmethacrylat und
a-2) 0 - 50 Gew.-% mindestens eines von Methylmethacrylat verschiedenen Monomeren der Formel I 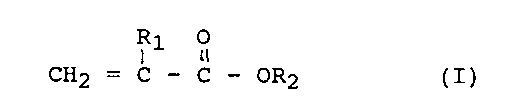 worin
R₁ für Wasserstoff oder Methyl und
R₂ für einen ggfs. verzweigten Alkylrest mit 1 bis 10 Kohlenstoffatomen und
a-3) 0 - 5 Gew.-% eines haftungsvermittelnden Monomeren HM
B) einem durch Suspensionspolymerisation gewonnenen Perlpolymerisat PP aufgebaut aus
b-1) 20 - 100 Gew.-% Methylmethacrylat und
b-2) 0 - 80 Gew.-% mindestens eines von Methylmethacrylat verschiedenen Monomeren der Formel I
b-3) 0 - 5 Gew.-% eines haftungsvermittelnden Monomeren HM
C) einem Weichmacher W in Anteilen von 5 bis 200 Gew.-Teilen auf 100 Gew.-Teile der Polymermischung aus A) + B)
mit der Maßgabe, daß
α) mindestens eine der beiden Komponenten A) oder B) ein Copolymerisat gemäß a-2) oder b-2) darstellt, das mindestens 5 Gew.-% mindestens eines Monomeren der Formel I enthält,
β) das Gewichtsverhältnis der Komponenten A) zu der Komponente B) 95 : 5 bis 30 : 70 beträgt, und daß
γ) die durch Sprühtrocknung gewonnenen Homo- oder Copolymerisate FP gemäß A) eine Primärteilchengröße im Bereich 0,1 - 0,5 µm besitzen,
darstellen.

2. Durch Weichmacherzusatz weichgemachte thermisch verfilmbare Massen M gemäß Anspruch 1, dadurch gekennzeichnet, daß das Gewichtsverhältnis der Komponenten A) zu der Komponente B) 80 : 20 bis 50 : 50 beträgt.

3. Durch Weichmacherzusatz weichgemachte thermisch verfilmbare Massen M gemäß den Ansprüchen 1 und 2,
dadurch gekennzeichnet, daß die Komponente A) aufgebaut ist aus:
a'-1) 70 - 90 Gew.-% Methylmethacrylat und
a'-2) 10 - 30 Gew.-% mindestens eines Monomeren der Formel I

4. Durch Weichmacherzusatz weichgemachte thermisch verfilmbare Massen M gemäß den Ansprüchen 1 - 3,
dadurch gekennzeichnet, daß die Komponente B) aufgebaut ist aus:
b'-1) 50 - 80 Gew.-% Methylmethacrylat und
b'-2) 20 - 50 Gew.-% mindestens eines Monomeren der Formel I

5. Durch Weichmacherzusatz weichgemachte thermisch verfilmbare Massen M gemäß den Ansprüchen 1 - 4, dadurch gekennzeichnet, daß R₂ in den Monomeren der Formel I für C4-Alkyl steht.

6. Durch Weichmacherzusatz weichgemachte thermisch verfilmbare Massen M gemäß den Ansprüchen 1, 2 und 5, dadurch gekennzeichnet, daß die haftungsvermittelnden Monomeren HM ausgewählt sind aus der Gruppe bestehend aus stickstoffhaltigen Vinylheterocyclen, copolymerisierbaren vinylischen Carbonsäuren, Hydroxyalkyl- und aminoalkylsubstituierten Estern oder Amiden der Acryl- und der Methacrylsäure.

7. Durch Weichmacherzusatz weichgemachte thermisch verfilmbare Massen M gemäß Anspruch 6, dadurch gekennzeichnet, daß die Primärteilchen der Komponente A zu Agglomeraten im Bereich 5 - 100 µm zusammengelagert sein können.

8. Durch Weichmacherzusatz weichgemachte thermisch verfilmbare Massen M gemäß den Ansprüchen 1 - 7, dadurch gekennzeichnet, daß das durch Suspensionspolymerisation gewonnene Perlpolymerisat PP eine Teilchengröße von 10 - 100 µm besitzt.

9. Durch Weichmacherzusatz weichgemachte thermisch verfilmbare Massen M gemäß Anspruch 8, dadurch gekennzeichnet, daß das Perlpolymerisat PP eine Teilchengröße von 40 - 60 µm besitzt.

10. Durch Weichmacherzusatz weichgemachte thermisch verfilmbare Massen M gemäß den Ansprüchen 1 - 9, dadurch gekennzeichnet, daß sie an sich bekannte Pigmente und Füllstoffe enthalten.

11. Durch Weichmacherzusatz weichgemachte thermisch verfilmbare Massen M gemäß Anspruch 10, dadurch gekennzeichnet, daß sie die an sich bekannten Pigmente und Füllstoffe in Anteilen von 0 bis 50 Gew.-% bezogen auf die Massen M enthalten.

12. Durch Weichmacherzusatz weichgemachte thermisch verfilmbare Massen M gemäß den Ansprüchen 1 - 11, dadurch gekennzeichnet, daß sie an sich bekannte Hilfsstoffe, ausgewählt aus der Gruppe der Haftvermittler, Netzmittel, Verlaufshilfsmittel, Treibmittel in Anteilen von 0 - 5 Gew.-% bezogen auf die Massen M enthalten.

13. Verwendung der thermisch verfilmbaren Massen M gemäß den Ansprüchen 1 - 12 zur Herstellung von Folien und Formkörpern.

14. Verwendung der thermisch verfilmbaren Massen M gemäß den Ansprüchen 1 - 12 zur Herstellung von Abdicht-, Kleber- und Beschichtungsmassen.

## Claims

1. Compounds based on poly(meth)acrylate which are softened by added plasticiser and which are capable of thermal film formation, comprising a polymer obtained from a dispersion and a bead polymer, characterised in that the compounds M are mixtures of components
A) a finely dispersed homo- or copolymer FP obtained by spray drying of a polymer dispersion and synthesised from
a-1) 50 - 100 wt.% of methylmethacrylate and
a-2) 0 - 50 wt.% of at least one monomer of Formula I different from methylmethacrylate, 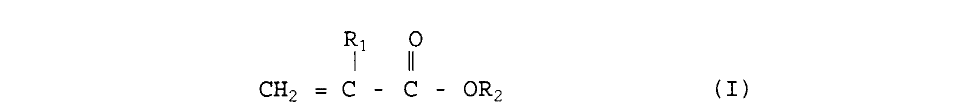 wherein
R₁ is hydrogen or methyl and
R₂ is an optionally branched alkyl group having 1 to 10 carbon atoms and
a-3) 0 - 5 wt.% of an adhesion-promoting monomer HM
B) a bead polymer PP obtained by suspension polymerisation and synthesised from
b-1) 20 - 100 wt.% of methylmethacrylate and
b-2) 0 - 80 wt.% of at least one monomer of Formula I different from methylmethacrylate
b-3) 0 - 5 wt.% of an adhesion-promoting monomer HM
C) a plasticiser W in amounts of 5 to 200 parts by weight per 100 parts by weight of the polymer mixture of A) + B)
with the proviso that
α) at least one of the two components A) or B) is a copolymer as described under a-2) or b-2), which comprises at least 5 wt.% of at least one monomer of Formula I,
β) the weight ratio between the components A) and the component B) is 95 : 5 to 30 : 70, and that
γ) the homo or copolymers FP of A) obtained by spray drying have a primary particle size within the range of from 0.1 - 0.5 µm.

2. Compounds according to claim 1 softened by added plasticiser and capable of thermal film formation, characterised in that the weight ratio between the components A) and the component B) is 80 : 20 to 50 : 50.

3. Compounds M according to claims 1 and 2, softened by added plasticiser and capable of thermal film formation, characterised in that the component A) is synthesised from:
a'-1) 70 - 90 wt.% of methylmethacrylate and
a'-2) 10 - 30 wt.% of at least one monomer of Formula I

4. Compounds M according to claims 1 to 3, softened by added plasticiser and capable of thermal film formation, characterised in that the component B) is synthesised from
b'-1) 50 - 80 wt.% of methylmethacrylate and
b'-2) 20 - 50 wt.% of at least one monomer of Formula I

5. Compounds M according to claims 1 to 4, softened by added plasticiser and capable of thermal film formation, characterised in that R₂ in the monomers of Formula I is C4-alkyl.

6. Compounds M according to claims 1, 2 and 5, softened by added plasticiser and capable of thermal film formation, characterised in that the adhesion-promoting monomers HM are selected from the group comprising nitrogen-containing vinyl heterocycles, copolymerisable vinyl carboxylic acids, hydroxyalkyl-and aminoalkyl-substituted esters or amides of acrylic and methacrylic acid.

7. Compounds M according to claim 6, softened by added plasticiser and capable of thermal film formation, characterised in that the primary particles of the component A may aggregrate to form agglomerates in the range of 5 - 100 µm.

8. Compounds M according to claims 1 - 7, softened by added plasticiser and capable of thermal film formation, characterised in that the bead polymer PP obtained by suspension polymerisation has a particle size of 10 - 100 µm.

9. Compounds M according to claim 8, softened by added plasticiser and capable of thermal film formation, characterised in that the bead polymer PP has a particle size of 40 - 60 µm.

10. Compounds M according to claims 1 - 9, softened by added plasticiser and capable of thermal film formation, characterised in that they comprise pigments and fillers known per se.

11. Compounds M according to claim 10, softened by added plasticiser and capable of thermal film formation under heat, characterised in that they comprise pigments and fillers in amounts of 0 to 50 wt.% based on the compounds M.

12. Compounds M according to claims 1 to 11, softened by added plasticiser and capable of thermal film formation, characterised in that they are selected from the group of adhesives, wetting agents, levelling excipients, expanding agents, in amounts of 0 - 5 wt.% based on the compounds M.

13. Use of the compounds M according to claims 1 to 12, which are capable of thermal film formation, for producing sheets and moulded articles.

14. Use of the compounds M according to claims 1 to 12, which are capable of thermal film formation, for preparing sealing, adhesive and coating compounds.

## Revendications

1. Masses à base de poly (méth)acrylate, thermiquement filmogènes, plastifiées par addition de plastifiant, contenant un polymère obtenu à partir d'une dispersion et un polymère en perles,
caractérisées en ce que les masses M sont des mélanges des composants suivants
A) un homo- ou copolymère FP en fines particules, obtenu par séchage par pulvérisation de dispersions de polymère, composé de
a-1) 50 à 100% en poids de méthacrylate de méthyle,
a-2) 0 à 50% en poids d'au moins un monomère différent du méthacrylate de méthyle, de formule I 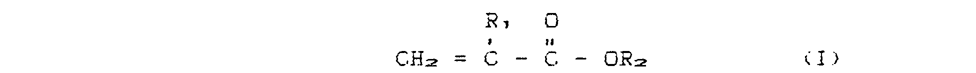 dans laquelle
R₁ est mis pour un atome d'hydrogène ou un reste méthyle et
R₂ est mis pour un reste alkyle à 1-10 atomes de carbone éventuellement substitué, et
a-3) 0 à 5% en poids d'un monomère compatibilisant HM,
B) un polymère en perles PP obtenu par polymérisation en suspension, composé de
b-1) 20 à 100% en poids de méthacrylate de méthyle,
b-2) 0 à 80% en poids d'au moins un monomère différent du méthacrylate de méthyle, de formule I, et
b-3) 0 à 5% en poids d'un monomère compatibilisant HM,
C) un plastifiant W dans des proportions de 5 à 200 parties en poids pour 100 parties en poids du mélange de polymères A) + B).
étant spécifié que
α) l'un au moins des deux composants A) et B) est un copolymère selon a-2) ou b-2) qui contient au moins 5% en poids d'au moins un monomère de formule I,
β) le rapport pondéral du composant A) au composant B) est compris entre 95:5 et 30:70, et
γ) les homo- ou copolymères FP obtenus par séchage par pulvérisation selon A) ont une grosseur de particules primaires dans la gamme de 0,1 à 0,5 µm.

2. Masses M thermiquement filmogènes, plastifiées par addition de plastifiant selon la revendication 1, caractérisées en ce que le rapport pondéral au composant A) au composant B) est compris entre 80:20 et 50:50.

3. Masses M thermiquement filmogènes, plastifiées par addition de plastifiant selon la revendication 1 ou 2, caracterisées en ce que le composant A) est composé de
a'-1) 70 à 90% en poids de méthacrylate de méthyle et
a'-2) 10 à 30 % en poids d'au moins un monomère de formule I.

4. Masses M thermiquement filmogènes, plastifiées par addition de plastifiant selon l'une quelconque des revendications 1 à 3, caractérisées en ce que le composant B) est composé de
b'-1) 50 à 80% en poids de méthacrylate de méthyle et
b'-2) 20 à 50% en poids d'au moins un monomère de formule I.

5. Masses M thermiquement filmogènes, plastifiées par addition de plastifiant selon l'une quelconque des revendications 1 à 4, caractérisées en ce que R₂ dans les monomères de formule I est mis pour un reste alkyle en C₄.

6. Masses M thermiquement filmogènes, plastifiées par addition de plastifiant selon l'une quelconque des revendications 1, 2 et 5, caractérisées en ce que les monomères compatibilisants HM sont choisis dans le groupe constitué par
les hétérocycles vinyliques azotés,
les acides carboxyliques vinyliques copolymérisables,
les esters ou amides hydroxyalkyl- ou aminoalkyl- substitués de l'acide acrylique et de l'acide méthacrylique.

7. Masses M thermiquement filmogènes, plastifiées par addition de plastifiant selon la revendication 6, caractérisées en ce que les particules primaires du composant A) peuvent se réunir en agglomérés de grosseur comprise entre 5 et 100 µm.

8. Masses M thermiquement filmogènes, plastifiées par addition de plastifiant selon l'une quelconque des revendications 1 à 7, caractérisées en ce que le polymère en perles PP obtenu par polymérisation en suspension a une grosseur de particules de 10 à 100 µm.

9. Masses M thermiquement filmogènes, plastifiées par addition de plastifiant selon la revendication 8, caractérisées en ce que le polymère en perles PP a une grosseur de particules de 40 à 60 µm.

10. Masses M thermiquement filmogènes, plastifiées par addition de plastifiant selon l'une quelconque des revendications 1 à 9, caractérisées en ce qu'elles contiennent des pigments et des charges en soi connus.

11. Masses M thermiquement filmogènes, plastifiées par addition de plastifiant selon la revendication 10, caractérisées en ce qu'elles contiennent les pigments et charges en soi connus dans des proportions de 0 à 50% en poids par rapport aux masses M.

12. Masses M thermiquement filmogènes, plastifiées par addition de plastifiant selon l'une quelconque des revendications 1 à 11, caractérisées en ce qu'elles contiennent des adjuvants en soi connus, choisis dans le groupe des compatibilisants, des agents dispersants, des adjuvants de nivellement, des agents de gonflement, dans des proportions de 0 à 5% en poids par rapport aux masses M.

13. Utilisation des masses thermiquement filmogènes M selon l'une quelconque des revendications 1 à 12 pour la fabrication de feuilles et de corps moulés.

14. Utilisation des masses thermiquement filmogènes M selon l'une quelconque des revendications 1 à 12 pour la fabrication de masses d'étanchéité, de collage et d'enduction.
